Europäisches Patentamt

(19) European Patent Office

Office européen des brevets

(11) Publication number: **0 004 155**
**B1**

(12) **EUROPEAN PATENT SPECIFICATION**

(45) Date of publication of patent specification: 27.10.82

(51) Int. Cl.³: **B 60 B 27/02, B 60 B 1/04**

(21) Application number: 79300295.7

(22) Date of filing: 27.02.79

(54) A wheel hub for a spoked wheel and use thereof.

(30) Priority: 28.02.78 JP 26850/78
06.06.78 JP 77576/78
02.02.79 JP 13317/78

(43) Date of publication of application:
19.09.79 Bulletin 79/19

(45) Publication of the grant of the patent:
27.10.82 Bulletin 82/43

(84) Designated Contracting States:
BE DE FR GB IT

(56) References cited:
DE - C - 95 783
DE - C - 99 859
FR - A - 371 295
US - A - 2 702 725

(73) Proprietor: SHIMANO INDUSTRIAL COMPANY
LIMITED
77, 3-cho Oimatsu-cho Sakai-shi
Osaka (JP)

(72) Inventor: Hasebe, Masayuki
2131-3, Hijiki
Sakai-shi, Osaka (JP)

(74) Representative: Szczuka, Jan Tymoteusz et al,
Cruikshank & Fairweather 19 Royal Exchange
Square
Glasgow G1 3AE Scotland (GB)

Courier Press, Leamington Spa, England.

A wheel hub for a spoked wheel and use thereof

This invention relates to a hub for a spoked wheel comprising a hub shell having at opposite axial ends thereof a pair of opposed hub flange means; and a hub shaft for rotatably supporting said hub shell with a pair of bearing means disposed between said hub shaft and hub shell; each of said hub flange means having a plurality of spoke apertures each extending generally parallel to the axis of said hub shell, said plurality of spoke apertures being arranged generally concentrically with respect to the axis of said hub shell.

Such a device is known from US—A— 2 702 725 wherein the plurality of spoke apertures comprises a first group and a second group of spoke apertures axially displaced relative to each other, successive ones of said first and second groups alternating with each other in the circumferential direction.

In this device the first and second groups of the spoke apertures are disposed at smaller and larger spacings, respectively, from the axis of the hub shell.

Another device is known from FR—A— 371 295 wherein the axially displaced alternating first and second groups of the spoke apertures are arranged at a regular spacing from the hub shell axis but wherein no hub shaft is disclosed. In this device the first and second groups are provided in separate, axially adjacent, respective flanges provided on the hub shell.

In use of such a hub, spokes are inserted through the spoke apertures and their remote ends fixed to a wheel rim, so that the hub, together with the rim and spokes, constitutes the spoked wheel for a bicycle, tricycle or other spoked wheel vehicle.

The spoke apertures in a conventional hub are formed in each of the hub flanges extending parallel to the rotational and longitudinal axis of the hub shell and arranged uniformly with respect to the hub flange in a direction parallel to said axis.

As a result in most conventional hubs the spokes have to be inserted into the apertures alternately from the inside and outside faces of each of the hub flanges and assembled together in a so-called "alternate assembly". Accordingly, a so-called "one-sided assembly" in which spoke insertion is effected from the inside face only of the flange, is not possible.

The well-known "alternate assembly" is divided into the so-called open type and cross type assemblies. The spokes in the open type are inserted into the apertures from the outside face of the hub flange and from the inside face thereof and extend cross-wise without contacting with each other to reach the wheel rim. Those in the cross type extend from the inside and outside faces of the hub flange and intersect, extending alternately in directions axially slightly outwards and slightly inwards of the hub flange, and contact each other under pressure at their intersections.

The inside and outside spokes in the open type assembly, in contrast, are spaced apart at their intersections, whereby each individual spoke is liable to be independently subjected to wind pressure during running of the vehicle. Furthermore, the spokes extending from the inside face of each of the hub flanges are axially spaced at intervals smaller in length than those between the spokes extending from the outside face by the thickness of the two hub flanges, thereby adversely affecting the stiffness of each spoke.

The cross type assembly has the disadvantage in that the spokes, which interchange outwardly or inwardly at the intersections, tend to twist when bending the intersections, whereby vibrations or load-shifting tend to result in rubbing between the spokes which can be noisy and whereby the stiffness of spoke is reduced.

The inventor has found in the case of a conventional hub for a spoked wheel the spokes cannot be inserted into the spoke apertures from only one side of the hub flange during assembly of the wheel, for the following reason. The spokes are inserted through the spoke apertures in the hub flange, are drawn-out in the direction of rotation of the driven hub and in a direction reversed thereto, and take up tension and compression respectively so as to constitute, together with a rim, the spoked wheel, with the spokes extending in the two different directions, and intersecting at an intermediate portion when inserted into the spoke apertures of the hub flange from one side (the axially inward face) and drawnout from the axially outward face in such a manner that the spokes interfere substantially with each other at their points of intersection giving rise to spoke distortion.

It is an object of the invention to provide a new form of hub construction minimising the above disadvantages and enabling one-sided spoke assembly.

The present invention provides in a first aspect a hub for a spoked wheel, comprising a hub shell having at opposite axial ends thereof a pair of opposed hub flange means; and a hub shaft for rotatably supporting said hub shell with a pair of bearing means disposed between said hub shaft and hub shell; each of said hub flange means having a plurality of spoke apertures each extending generally parallel to the axis of said hub shell, said plurality of spoke apertures being arranged generally concentrically with respect to the axis of said hub shell and comprising a first group and a second group of spoke apertures axially displaced relative to each other, successive ones of said first and second groups alternating with each other in the circumferential direction, characterized in that said spoke apertures are arranged at a regular spacing from the axis of said hub shell, and each of said hub flanges is formed with stepped portions so as to be partially recessed at a plurality of circumferential positions, the recessed and non-recessed portions of the flanges providing respectively first and second flange portions axially displaced relative to each other, in which flange portions are disposed said first and second groups of spoke apertures, respectively.

In another aspect the present invention provides a hub for a spoked wheel, comprising a hub shell having at opposite axial ends thereof a pair of opposed hub flange means; and a hub shaft for rotatably supporting said hub shell with a pair of bearing means disposed between said hub shaft and hub shell; each of said hub flange means having a plurality of spoke apertures each extending generally parallel to the axis of said hub shell, said plurality of spoke apertures being arranged generally concentrically with respect to the axis of said hub shell and comprising a first group and a second group of spoke apertures axially displaced relative to each other, successive ones of said first and second groups alternating with each other in the circumferential direction, and wherein said first and second groups of spoke apertures are disposed in first and second flange portions, respectively, which extend generally circumferentially of said hub flange means characterized in that each of said hub flange means is provided with washer means having spoke apertures which washer means are disposed on at least one face of the hub flange means in contact therewith, so as to complete at least one of: said first flange portions in which said first group of spoke apertures is provided and said second flange portions in which said second group of spoke apertures is provided, with respective ones of said spoke apertures in said hub flange means and washer means axially aligned with each other.

Thus with a hub of the invention all the spokes may be inserted through the bores from one side, namely the axially inward face, of hub flange and drawn out of the axially outward face thereof in the above mentioned two directions.

Each of the spokes of the spoked wheel may be made in conventional manner of wire material of a predetermined length and strong elasticity, being cranked at one end at an angle of about 90°, and has at the cranked end a head larger in diameter than the wire. In general, the spokes to be inserted into both the first and second group spoke apertures have cranked portions of substantially equal length.

In a further aspect the present invention provides a hub connected by spokes to a wheel rim wherein the hub comprises a hub shell having at opposite axial ends thereof a pair of opposed hub flange means; and a hub shaft for rotatably supporting said hub shell with a pair of bearing means disposed between said hub shaft and hub shell; each of said hub flange means having a plurality of spoke apertures each extending generally parallel to the axis of said hub shell said plurality of spoke apertures being arranged generally concentrically with respect to the axis of said hub shell, and comprising a first group and a second group of spoke apertures axially displaced relative to each other, successive ones of said first and second groups alternating with each other in the circumferential direction characterized in that each of said hub flange means includes washer means having spoke apertures which washer means are disposed on at least one face of the hub flange in contact therewith, so as to complete at least one of said first flange portions in which said first group of spoke apertures is provided and said second flange portions in which said second group of spoke apertures is provided, said spokes extending through the spoke apertures in said hub flanges and washer means and retaining said washer means in contact with the hub flanges.

Various ways of carrying out the invention are described in detail below with reference to the drawings which illustrate some preferred specific embodiments only, and in which:

Fig. 1 is a partially cutaway front view of one embodiment of a hub of the invention;

Fig. 2 is a side view of a hub flange of the hub of Fig. 1, showing mounting of the spokes thereon;

Fig. 3 is an enlarged sectional view taken on line III—III in Fig. 2;

Fig. 4 is a side view of a modification of the construction of Figs. 1 to 3 corresponding to that of Fig. 2;

Fig. 5 is a sectional view taken on Line V—V in Fig. 4;

Fig. 6 is a sectional view taken on Line VI—VI in Fig. 4;

Fig. 7 is a side view of a further modification of the construction of Fig. 4 corresponding to the view of Fig. 2;

Figs. 8 to 10 show another modified embodiment of a hub of the invention,

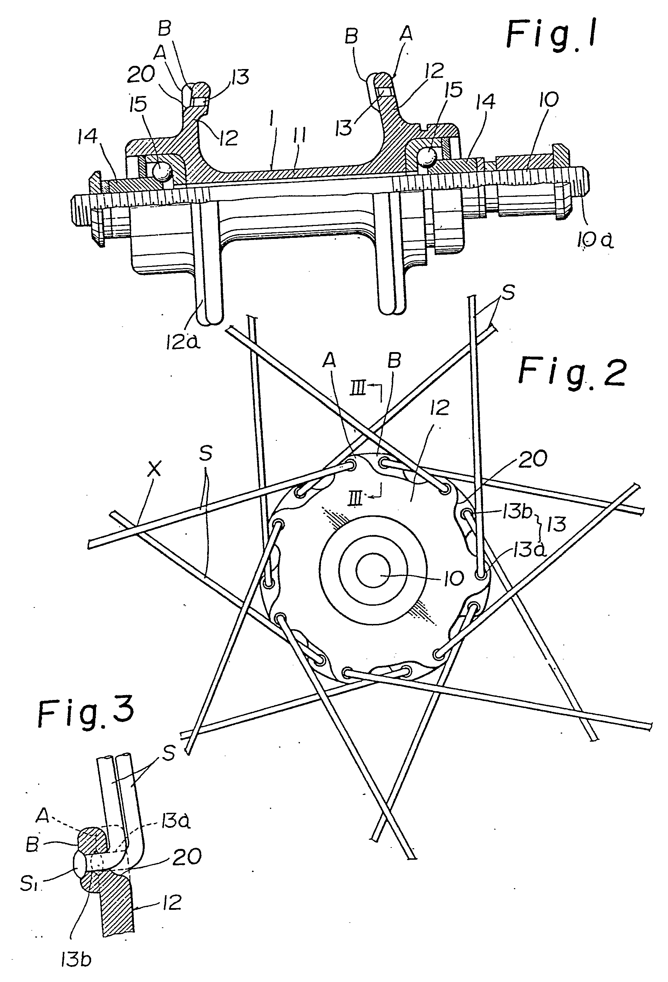

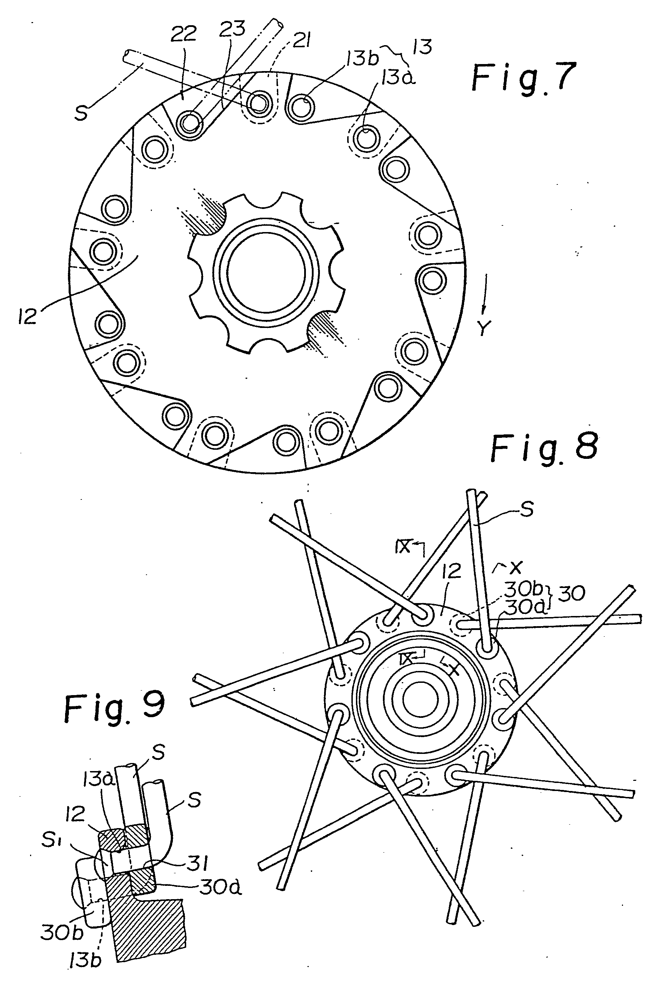

Fig. 8 being a side view thereof, corresponding to the view of Fig. 2;

Fig. 9 being an enlarged sectional view taken on Line IX—IX in Fig. 8; and

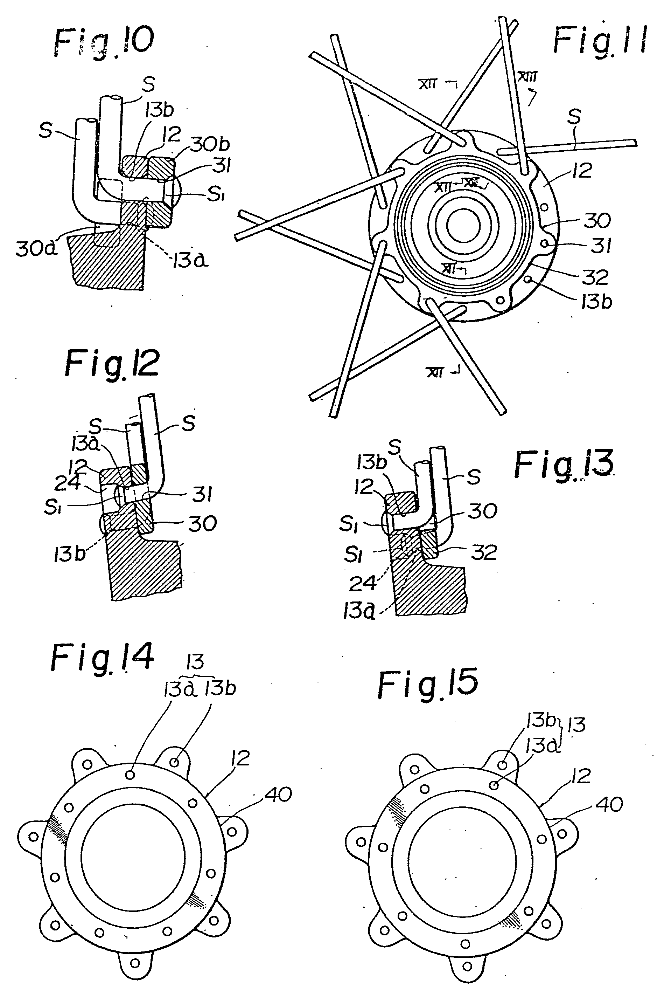

Fig. 10 being an enlarged sectional view taken on Line X—X in Fig. 8;

Fig. 11 is a side view of a modification of the construction of Fig. 8, corresponding to the view of Fig. 2;

Fig. 12 is an enlarged sectional view taken on Line XII—XII in Fig. 11;

Fig. 13 is an enlarged sectional view taken on Line XIII—XIII in Fig. 11; and

Figs. 14 and 15 are side views of further modified embodiments of the hub of the invention.

Fig. 1 shows a hub 1 for the wheel of a spoked wheel for a vehicle, such as a bicycle or tricycle. The hub 1 comprises a hub shell 11 including at opposite axial ends thereof a pair of opposed hub flange means in the form of hub flanges 12, 12, a hub shaft 10 rotatably supporting the hub shell 11, with a pair of bearing means disposed between the hub shell 11 and the hub shaft 10.

The hub 1, wheel rim (not shown), and spokes $S$ of intensely elastic high tensile wire, together constitute the wheel, the hub 1 being positioned at the centre of the rim and connected thereto by the spokes $S$.

Each of the hub flanges 12 is generally disc-shaped and is larger in diameter than the hub shell 11, having an inside face extending radially outwards from the hub shell 11, and has in the vicinity of its outer periphery a plurality of spoke apertures 13 extending in a direction generally parallel to the axis of the hub shell 11, the plurality of apertures 13 being arranged concentrically with respect to the axis of hub shell 11.

The bearing means comprise ball holders 14 and balls 15 respectively. The ball holders 14 are screwthreadedly engaged with screw threads $10a$ at both axial ends of the hub shaft 10, so that the hub shell 11 is rotatably supported on the hub shaft 10 via the balls 15. The hub shaft 10 may be fixed to the frame of the vehicle in conventional manner. A hub 1, constituted as above is generally similar to a conventional hub as will be understandable without further detailed description.

In addition, hubs of the invention may equally well be used for both the rear wheel of a bicycle as well as the front wheel as well as for various other two or three (or more) wheeled vehicles.

In a hub as described above, the present invention provides that the plurality of spoke apertures 13 in each of the hub flanges 12 comprises two groups: a first group of spoke apertures $13a$ each arranged in a first portion $A$ at the hub flange 12 and the second group of spoke apertures $13b$ each arranged in a second portion $B$, the first and second portions $A$ and $B$ being displaced relative to each other in a direction parallel to the rotational axis of the hub shell 11 and successive ones of said first and second groups of apertures $13a$, $13b$ alternating with each other so that an aperture $13b$ of the second group is adjacent to two apertures $13a$ of the first group which are separated thereby, in each case.

In detail, the hub flange 12 is, as shown in Figs. 1 to 3 provided with stepped portions 20 so as to be partially recessed at a peripheral portion thereof axially inwardly, thereby providing the second portions $B$, the remaining non-recessed peripheral portions being left as the first portions $A$. In addition, the peripheral portion of the hub flange 12 may be axially outwardly recessed.

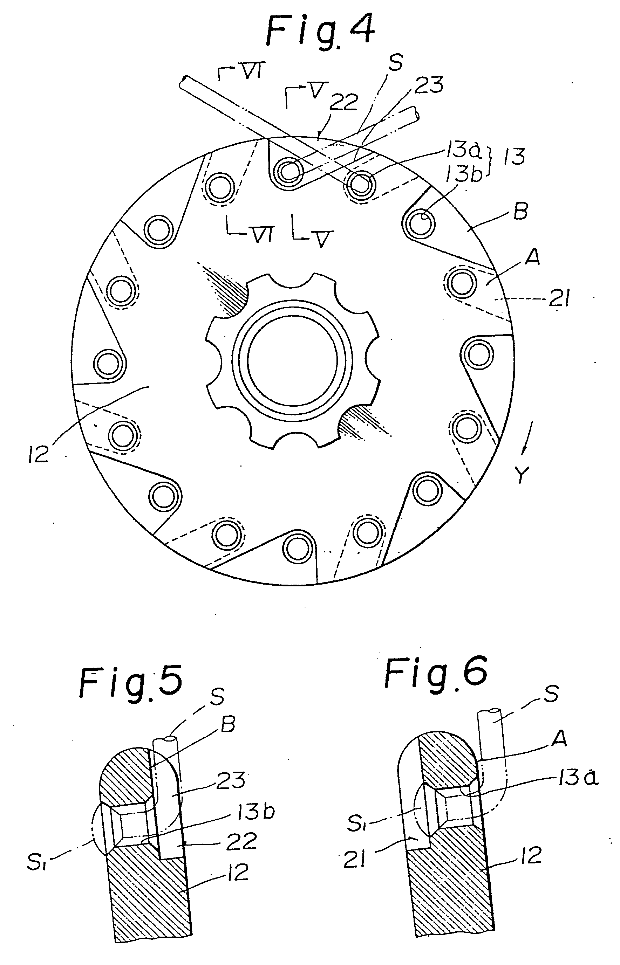

Alternatively, the hub flange 12 may, as shown in Figs. 4 to 6, be made greater in thickness than is normal and is, at the inwardly and outwardly disposed faces of the peripheral portion thereof, cut away axially to form a plurality of inner recesses 21 and outer recesses 22, thereby providing the first and second portions $A$ and $B$ displaced relative to each other axially of the hub shell 11, or a plurality of washers 30 may, as shown in Figs. 8 to 10, be alternately supported in contact with either side of the hub flange 12, thereby providing the axially relatively displaced first and second portions $A$ and $B$ and apertures $13a$ and $13b$ therein. Furthermore, the spoke apertures 13 in the hub flange 12 may, as shown in Figures 11 to 13, vary in their axial length, the washer means 30 being arranged on the axially inward or outward face of the hub flange 12 with spoke apertures 31 therein aligned with the shorter spoke apertures 30 in the hub flange 12, so as to complete the hub flange means and the respective ones of the first and second portions $A$ and $B$. The hub flange 12 may also, as shown in Figs. 14 and 15, be provided with radially extending stepped noses 40 with spoke apertures 13 therein arranged so as to displace the first and second portions axially of the hub flange 12 and to space the spoke apertures $13a$, $13b$ radially. It is to be noted that the groups of spoke apertures 13, which are arranged concentrically in the embodiments of Figs. 1 to 15, are, except for those in said Figs. 14 and 15, all spaced substantially equally from the axis of the hub shell 11. In other words, all the spoke apertures 13, as seen in Figs. 3, 4, 7, 8 and 11, are on an imaginary circle around the rotational axis of hub shell 11. As a result, the spokes $S$ can be made equal in length because of the uniform distances between the apertures 13 and the wheel rim, and there is no need for the hub flange 12 to be increased in diameter. In addition, the invention is also applicable to the first and second portions in the embodiment of Figs. 14 and 15, which are relatively displaced radially with respect to the hub flange 12. In this instance, an imaginary circle connecting the spoke apertures 13 positioned radially outwardly of the hub flange should be larger in diameter than normal for a given diameter of the hub shell 11. As a result, the spoke apertures $13b$ in the second portions $B$ provided radially outwardly of the first portions $A$, increase the outer diameter of the hub flange 12. In contrast, when all the spoke apertures 13 are arranged on a single imaginary circle, the outer diameter of the hub flange 12 is minimised, thereby increasing the strength of the wheel and protecting against deformation thereof even with a hub flange 12 of smaller diameter.

In a hub constructed as above, all the spokes $S$ are, as shown in Fig. 2, inserted into the bores 13 from the axially inside face of the hub flange 12 and are assembled thereat so that the heads of the spokes $S$ abut the axially inside face of the hub flange respectively, and can then be drawn out outwardly and generally tangentially of the hub flange 12. The spokes S intersect with each other at intermediate portions as shown in Fig. 3 and their remote ends fixed to the wheel rim (not shown). In this case, the spokes inserted into the first group of spoke apertures 13a in the first portions A are drawn-out rearwardly with respect to the direction of rotation of the driven hub 1 and those inserted into the second group 13b are drawn-out in the reverse direction thereto, whereby each of the spokes in the apertures 13a, 13b of the first and second portions A, B intersects at an intermediate portion another spoke, either contacting it or passing in close proximity thereto. The spokes S are not however displaced axially outwardly or inwardly with respect to the hub axis at the respective intersections X i.e. they are not bent so as to change direction from outward to inward or vice versa.

·Thus, the spokes S drawn-out through the first portion A are all positioned outwardly with respect to those spokes S drawn through the second portions B. Conversely, the spokes S at the second portions B are all positioned inwardly with respect to those spokes S at the first portions A.

Accordingly, with a hub of the invention the spokes can be stretched straight between the hub flanges and the wheel rim without any twisting or bending at the intersections, and the spacing of the spokes at axially larger intervals at both hub flanges improves the stiffness of the spokes when compared with the cross type assembly. Furthermore, the spokes at each of the hub flanges are displaced axially outwardly and inwardly thereof and contact with each other or are spaced at small intervals at the intersections as already mentioned above so that too wide intervals between intersecting spokes as in the open type assembly are avoided and the lengths of the intersecting portions of the spokes can be made larger, thereby minimizing the effects of wind pressure in use of the wheel.

The above constructions of hub have been described mainly in accordance with Figs. 1 to 3. The modified construction of hub will now be described in further detail.

Referring to Figs. 4 to 7, the first group spoke apertures 13a in the first portions A are substantially equal in axial length to those of the second group 13b in the second portions B, and the first portions A are displaced axially outwardly of the hub shell 11 with respect to second portions B in the same way as in the embodiment of Figs. 1 to 3, but each of the hub flanges 12 is partially cut-away at its inwardly and outwardly disposed faces to form the first and second portions A and B respectively. Specifically, the hub flange 12 is cut-away at its axially inward face as shown in Fig. 6 to form inner recesses 21 providing the first portions A and at the axially outward face to form outer recesses 22 providing the second portions B.

The outer recesses 22 are provided with guide faces 23 which extend in the direction of drawing-out of spokes S inserted into the apertures 13b in the second portions B as shown in Figs. 4 to 7. The guide faces 23 are also applicable to the construction shown in Figs. 1 to 3, as well as to a construction in which the hub flange 12 is partially axially outwardly swollen at its peripheral portion to form the first portions A in place of the recesses 22 serving as the second portions B in Figs. 4 to 7.

In the case that the inner and outer recesses 21 and 22 are, as shown in Figs. 4 to 7, formed in the inner and outer faces of the hub flange 12 respectively, these recesses are preferred not to overlap with each other in the axial direction of the hub flange 12. Thus, when a larger number of spokes is drawn out at a smaller angle with respect to respective radii of the hub flange 12 when compared with the arrangement in Fig. 4 wherein the first group spoke apertures 13a in the first portions A and the second group apertures 13b in the second portions B are circumferentially spaced at uniform intervals, i.e. in an arrangement as shown in Fig. 7, then the first and second group apertures 13a, 13b are non-uniformly spaced, the spacing between a first group aperture 13a and the adjacent second group aperture 13b being smaller in the forward driving direction Y than in the reverse direction.

The guide faces 23 indicate the direction of drawing of the spokes when assembled, which is helpful to a worker, especially an unskilled one, in achieving assembly of the spokes S by facilitating correct drawing of them along the respective guide faces 23.

Accordingly, it is preferred to orient the guide faces 23 towards the direction of rotation of the hub 1 when driven, i.e., in the arrow direction Y in Fig. 4. By doing this, the spokes S which transmit drive torque from the hub 1 to the wheel rim when the hub is driven, in other words, the spokes S, which extend rearwardly with respect to the direction of rotation of the driven hub 1 so as to be subjected to tension when the hub is driven, are invariably mounted on the first portions A displaced outwardly of the second portions B, whereby the spokes at the first portions A are mounted to the pair of hub flanges 12, 12 at axially larger intervals than normal respectively, resulting in improved stiffness of the spokes against transverse loadings applied thereto when e.g. a bicycle with a wheel incorporating a hub of the invention turns a corner.

In the embodiment of Figs. 8 to 10 the spoke apertures 13, as in the above described embodiments, are equal in axial length and arranged on one imaginary circle concentric with the axis of the hub shell 11, but the first and second portions A and B of the hub flange means are axially displaced relative to each other by means of washers 30 which are provided with apertures 31 which are aligned with the spoke apertures 13 in the hub flange 12. The washers 30 may be in the form of discs, as shown in Fig. 8, or in any other convenient-shape e.g. square plates. The washers 30 are divided into first washers *30a* which are supported on the hub flange 12 in contact with the axially outward face thereof and second washers *30b* supported on the hub flange 12 in contact with the axially inward face thereof, so that the first washers *30a* provide part of the first portions *A* as shown in Fig. 9 and the second washers *30b* part of the second portions *B* as shown in Fig. 10.

The construction shown in Figs. 8 to 10 requires at the hub flanges 12 no recesses as shown in Figs. 1 through 7, thereby simplifying machining of the hub required in its production.

A further modified construction using washer means 30 is shown in Figs. 11 to 13. In this instance, the washers 30 are arranged only on the axially outward face of the hub flange 12 and instead of a plurality of individual washers 30, there is provided an annular connecting member 32 having a plurality of spoke apertures 31 disposed therein for alignment with respective spoke apertures 13 in the hub flange 12.

Specifically in the embodiment of Figs. 11 to 13, the first group spoke apertures *13a* in the first portions *A* are displaced axially outwardly of the hub flange 12, and the washer means 30 are positioned axially outwardly of the hub flange first group spoke apertures *13a* respectively.

It is to be noted that the abovementioned axial displacement of the first group spoke apertures *13a* means that the head $S_1$ of each of the spokes *S* is engaged with a said aperture *13a* at a position thereof displaced axially with respect to the hub flange 12. Specifically, at the axially inward face of the hub flange 12 are provided recesses 24 into which the heads $S_1$ of spoke *S* are insertable.

Furthermore, the embodiments shown in Figs. 14 and 15 have the first and second portions *A* and *B*, displaced radially relative to the hub flange 12 through stepped portions 40 respectively, so that the first portions *A* and first apertures *13a* therein are positioned radially inwardly of the hub flange 12 and the second portions *B* and second apertures *13b* therein, radially outwardly with respect to said first portions *A*.

Specifically the first group of spoke apertures *13a* in the first portions *A* in Fig. 14 is arranged radially inwardly with respect to the axis of hub flange 12 relative to the second group of spoke apertures *13b* in the second portions *b*, and the first and second group apertures *13a* and *13b* are displaced relative to each other circumferentially with respect to the hub flange 12. In Fig. 15, the first and second group spoke apertures *13a* and *13b* are aligned radially with respect to the hub flange 12.

As many different embodiments of this invention may be made without departing from the scope thereof, it is to be understood that the invention is not limited to the above specific embodiments thereof except as defined in the appended claims.

## Claims

1. A hub (1) for a spoked wheel, comprising a hub shell (11) having at opposite axial ends thereof a pair of opposed hub flange means (12); and a hub shaft (10) for rotatably supporting said hub shell (11) with a pair of bearing means (14, 15) disposed between said hub shaft (10) and hub shell (11); each of said hub flange means (12) having a plurality of spoke apertures (13) each extending generally parallel to the axis of said hub shell (11), said plurality of spoke apertures (13) being arranged generally concentrically with respect to the axis of said hub shell (11) and comprising a first group (13a) and a second group (13b) of spoke apertures axially displaced relative to each other, successive ones of said first and second groups (13a, 13b) alternating with each other in the circumferential direction, characterized in that said spoke apertures (13) are arranged at a regular spacing from the axis of said hub shell (11), and each of said hub flanges is formed with stepped portions (20) so as to be partially recessed at a plurality of circumferential positions, the recessed and non-recessed portions of the flanges providing respectively first and second flange portions (A, B) axially displaced relative to each other, in which flange portions (A, B) are disposed said first and second groups of spoke apertures (13a, 13b), respectively.

2. A hub as claimed in claim 1, wherein said spoke apertures (13) formed in said first and second flange portions (A, B) are substantially equal in axial length and said first flange portions (A) are displaced axially outwardly with respect to said second flange portions (B), and at the axially outer surface of each of said hub flange means (12) including said second spoke apertures (13b) in the second flange portions (B) are provided guide faces (23) extending in each case in the direction in which spokes inserted through said spoke apertures (13) extend in use of the hub.

3. A hub as claimed in claim 2 wherein said guide faces (23) are arranged to extend generally in the direction of rotation of said hub flange (12) when said hub is driven.

4. A hub (1) for a spoked wheel, comprising a hub shell (11) having at opposite axial ends thereof a pair of opposed hub flange means (12); and a hub shaft (10) for rotatably supporting said hub shell (11) with a pair of bearing means (14, 15) disposed between said hub shaft (10) and hub shell (11); each of said hub flange means (12) having a plurality of spoke apertures (13) each extending generally parallel to the axis of said hub shell (11), said plurality of spoke apertures (13) being arranged generally concentrically with respect to the axis of said hub shell (11) and comprising a first group (13a) and a second group (13*b*) of spoke apertures axially displaced relative to each other, successive ones of said first and second groups (13*a*, 13*b*) alternating with each other in the circumferential direction, and wherein said first and second groups of spoke apertures (13*a*, 13*b*) are disposed in first and second flange portions (*A*, *B*), respectively, which extend generally circumferentially of said hub flange means (12) characterized in that each of said hub flange means (12) is provided with washer means (30) having spoke apertures (31) which washer means (30) are disposed on at least one face of the hub flange means (12) in contact therewith, so as to complete at least one of: said first flange portions (*A*) in which said first group of spoke apertures (13*a*) is provided and said second flange portions (*B*) in which said second group of spoke apertures (13*b*) is provided, with respective ones of said spoke apertures (13, 31) in said hub flange means (12) and washer means (30) axially aligned with each other.

5. A hub as claimed in claim 4, wherein first washer means (30*a*) are provided in contact with the axially outward surface of each of said hub flanges (12) and supported thereon and second washer means (30*b*) are provided in contact with the axially inward surface of each of said hub flange means (12) and supported thereon, for completing respectively the first and second flange portions and the first and second spoke apertures therein respectively.

6. A hub as claimed in Claim 5 wherein said washer means comprises a plurality of individual washers (30) each having a spoke aperture (31) therein.

7. A hub as claimed in claim 4 wherein said washer means comprises a generally annular connecting member (32) having a plurality of spoke apertures (31) disposed generally circumferentially therein for alignment with respective spoke apertures (13) in the hub flange (12).

8. A hub as claimed in any one of claims 5 to 7 wherein the first and second groups of spoke apertures (13*a*, 13*b*) are arranged at a regular spacing from the axis of said hub shell (11).

9. A hub as claimed in any one of the preceding claims, wherein said first group of spoke apertures (13*a*) in the first flange portions (*A*) is arranged radially inwardly with respect to the rotational axis of each of said hub flanges (12) relative to said second group of spoke apertures (13*b*) in the second flange portions (*B*).

10. A spoked wheel comprising a hub (1) connected by spokes (5) to a wheel rim wherein the hub (1) comprises a hub shell (11) having at opposite axial ends thereof a pair of opposed hub flange means (12); and a hub shaft (10) for rotatably supporting said hub shell (11) with a pair of bearing means (14, 15) disposed between said hub shaft (10) and hub shell (11); each of said hub flange means (12) having a plurality of spoke apertures (13) each extending generally parallel to the axis of said hub shell (11) said plurality of spoke apertures (13) being arranged generally concentrically with respect to the axis of said hub shell (11), and comprising a first group (13*a*) and a second group (13*b*) of spoke apertures axially displaced relative to each other, successive ones of said first and second groups (13*a*, 13*b*) alternating with each other in the circumferential direction characterized in that each of said hub flange means includes washer means (30) having spoke apertures (31) which washer means (30) are disposed on at least one face of the hub flange (12) in contact therewith, so as to complete at least one of said first flange portions (*A*) in which said first group of spoke apertures (13*a*) is provided and said second flange portions (*B*) in which said second group of spoke apertures (13*b*) is provided, said spokes (*S*) extending through the spoke apertures (13, 31) in said hub flanges (12) and washer means (30) and retaining said washer means (30) in contact with the hub flanges (12).

**Patentansprüche**

1. Nabe (1) für ein Speichenrad, bestehend aus einem Nabenkörper (11) mit einem Paar gegenüberliegender Nabenflansche an seinen entgegengesetzten axialen Enden und einer Nabenwelle (10) zur drehbaren Lagerung dieses Nabenkörpers (11) mit einem Paar zwischen dieser Nabenwelle (10) und dem Nabenkörper (11) angeordneter Lagervorrichtungen (14, 15), wobei diese Nabenflansche (12) jeweils eine Mehrzahl von sich je allgemein achsparallel zu jenem Nabenkörper (11) erstreckenden Speichenlöchern (13) aufweisen, die allgemein konzentrisch zur Achse jenes Nabenkörpers (11) angeordnet sind und eine erste Gruppe (13a) sowie eine zweite Gruppe (13b) axial gegeneinander versetzter Speichenlöcher umfassen, wobei aufeinanderfolgende Löcher dieser ersten und zweiten Gruppen (13a, 13b) in der Umfangsrichtung abwechseln, dadurch gekennzeichnet, dass diese Speichenlöcher (13) in regelmässigem Abstand von der Achse jenes Nabenkörpers (11) angeordnet sind und diese Nabenflache jeweils mit gestuften Teilen (20) ausgebildet sind, so dass sie an mehreren Stellen ihres Umfangs teilweise abgesetzt sind, wobei die abgesetzten bzw. nicht abgesetzten Teile der Flansche gegeneinander axial versetzte erste bzw. zweite Flanschabschnitte (A, B) darstellen, in denen sich die besagten ersten bzw. zweiten Gruppen von Speichenlöchern (13a, 13b) befinden.

2. Nabe nach Anspruch 1, worin diese in den besagten ersten und zweiten Flanschabschnitten (A, B) gebildeten Speichenlöcher (13) im wesentlichen dieselbe axiale Länge aufweisen und jene ersten Flanschabschnitte (A) gegenüber den zweiten Flanschabschnitten (B) axial auswärts versetzt sind und an den axial äusseren Flächen jener die besagten zweiten Speichenlöcher (13b) enthaltenden Nabenflansche (12) in den zweiten Flanschabschnitten (B) jeweils Führungsflächen (23) vorgesehen sind, die sich in allen Fällen in derselben Richtung wie die durch diese Speichenlöcher (13) eingesetzten Speichen beim Gebrauch der Nabe erstrecken.

3. Nabe nach Anspruch 2, worin diese Führungsflächen (23) so angeordnet sind, dass sie sich beim Antrieb der Nabe allgemein in der Drehungsrichtung jenes Nabenflansches (12) erstrecken.

4. Nabe (1) für ein Speichenrad, bestehend aus einem Nabenkörper (11) mit einem Paar gegenüberliegender Nabenflansche (12) an seinen entgegengesetzten axialen Enden und einer Nabenwelle (10) zur drehbaren Lagerung dieses Nabenkörpers (11) mit einem Paar zwischen dieser Nabenwelle (10) und dem Nabenkörper (11) angeordneter Lagervorrichtungen (14, 15), wobei diese Nabenflansche (12) jeweils eine Mehrzahl von sich je allgemein achsparallel zu jenem Nabenkörper (11) erstreckenden Speichenlöchern (13) aufweisen, die allgemein konzentrisch zur Achse jenes Nabenkörpers (11) angeordnet sind und eine erste Gruppe (13a) sowie eine zweite Gruppe (13b) axial gegeneinander versetzter Speichenlöcher umfassen, wobei aufeinanderfolgende Löcher dieser ersten und zweiten Gruppen (13a, 13b) in der Umfangsrichtung abwechseln, und worin jene ersten bzw. zweiten Gruppen von Speichenlöchern (13a, 13b) in sich allgemein in der Umfangsrichtung jener Nabenflansche (12) erstreckenden ersten bzw. zweiten Flanschabschnitten (A, B) angeordnet sind, dadurch gekennzeichnet, dass jeder dieser Nabenflansche (12) mit einer Speichenlöcher (31) aufweisenden Scheibenanordnung (30) versehen ist, die auf mindestens einer Stirnseite der Nabenflansche (12) in Berührung damit angeordnet ist, um so mindestens entweder die ersten besagten Flanschabschnitte (A), in denen jene erste Gruppe von Speichenlöchern (13a) vorgesehen ist, und/oder die zweiten besagten Flanschabschnitte (B), in denen jene zweite Gruppe von Speichenlöchern (13b) vorgesehen ist, zu vervollständigen, wobei die entsprechenden Speichenlöcher (13, 31) in jenen Nabenflanschen (12) und der Scheibenanordnung (30) axial aufeinander ausgerichtet sind.

5. Nabe nach Anspruch 4, worin die erste Scheibenanordnung (30a) in Berührung mit der axial äusseren Oberfläche der beiden besagten Nabenflansche (12) und darauf abgestützt sowie die zweite Scheibenanordnung (30b) in Berührung mit der axial inneren Oberfläche der beiden besagten Nabenflansche (12) und darauf abgestützt angeordnet sind, um jeweils die ersten und zweiten Flanschabschnitte bzw. die ersten und zweiten Speichenlöcher darin zu vervollständigen.

6. Nabe nach Anspruch 5, worin jene Scheibenanordnung aus einer Mehrzahl einzelner Scheiben (30) besteht, welche je ein Speichenloch (31) in sich aufweisen.

7. Nabe nach Anspruch 4, worin jene Scheibenanordnung aus einem allgemein ringförmigen Verbindungsglied (32) mit mehreren darin allgemein über den Umfang verteilten Speichenlöchern (31) zur Ausrichtung mit den entsprechenden Speichenlöchern (13) im Nabenflansch (12) besteht.

8. Nabe nach einem der Ansprüche 5 bis 7, worin die ersten und zweiten Gruppen von Speichenlöchern (13a, 13b) in regelmässigem Abstand von der Achse des besagten Nabenkörpers (11) angeordnet sind.

9. Nabe nach einem der vorhergehenden Ansprüche, worin jene erste Gruppe von Speichenlöchern (13a) in den ersten Flanschabschnitten (A) bezüglich der Drehachse jener Nabenflansche (12) jeweils radial einwärts zu jener zweiten Gruppe von Speichenlöchern (13b) in den zweiten Flanschabschnitten (B) angeordnet ist.

10. Speichenrad mit einer durch Speichen (5) mit der Felge verbundenen Nabe (1), worin die Nabe (1) aus einem Nabenkörper (11) mit einem Paar gegenüberliegender Nabenflansche (12) an seinen entgegengesetzten axialen Enden und einer Nabenwelle (10) zur drehbaren Lagerung dieses Nabenkörpers (11) mit einem Paar zwischen dieser Nabenwelle (10) und dem Nabenkörper (11) angeordneter Lagervorrichtungen (14, 15) besteht, wobei diese Nabenflansche (12) jeweils eine Mehrzahl von sich je allgemein achsparallel zu jenem Nabenkörper (11) erstreckenden Speichenlöchern (13) aufweisen, die allgemein konzentrische zur Achse jenes Nabenkörpers (11) angeordnet sind und eine erste Gruppe (13a) sowie eine zweite Gruppe (13b) axial gengeneinander versetzter Speichenlöcher umfassen, wobei aufeinanderfolgende Löcher dieser ersten und zweiten Gruppen (13a, 13b) in der Umfangsrichtung abwechseln, dadurch gekennzeichnet, dass jeder dieser Nabenflansche eine Speichenlöcher (31) aufweisende Scheibenanordnung (30) einschliesst, die auf mindestens einer Stirnseite des Nabenflansches (12) in Berührung damit angeordnet ist, um so minestens entweder die ersten besagten Flanschabschnitte (A), in denen jene erste Gruppe von Speichenlöchern (13a) vorgesehen ist, und/oder die zweiten besagten Flanschabschnitte (B), in denen jene zweite Gruppe von Speichenlöchern (13b) vorgesehen ist, zur vervollständigen, wobei diese Speichen (S) sich durch die Speichenlöcher (13, 31) in diesen Nabenflanschen (12) und der Scheibenanordnung (30) erstrecken und diese Scheibenanordnung (30) in Berührung mit den Nabenflanschen (12) halten.

**Revendicàtions**

1. Moyeu (1) pour une roue à rayons, qui comprend une virole de moyeu (11) comportant à ses extrémités axiales opposées une paire de joues de moyeu opposées (12); et un arbre de moyeu (10) pour supporter en rotation ladite virole de moyeu (11) par l'intermédiaire de deux roulements (14, 15) disposés entre l'arbre de moyeu (10) et la virole de moyeu (11): chacune des joues de moyeu (12) comportant une pluralité d'orifices de rayons (13) s'étendant sensiblement parallèlement à l'axe de la virole de moyeu (11), ladite pluralité d'orifices de rayons (13) étant disposée de façon sensiblement concentrique par rapport à l'axe de la virole de moyeu (11) et comprenant un premier groupe (13a) et un deuxième groupe (13b) d'orifices de rayons décalés axialement l'un par rapport à l'autre, les orifices successifs du premier groupe et du deuxième groupe (13a, 13b) alternant entre eux dans la direction circonférentielle, lequel moyeu est caractérisé en ce que les orifices de rayons (13) sont situés à une distance constante de l'axe de la virole de moyeu (11), et en ce que chacune des joues de moyeu comporte des parties (26) disposées en gradin de façon à être partiellement en retrait dans une pluralité de positions circonférentielles, les parties en retrait et non en retrait des joues constituant respectivement des première et deuxième parties de joue (A, B) décalées axialement l'une par rapport à l'autre, les orifices de rayons (13a, 13b) des premier et deuxième groupes étant situés respectivement dans ces parties de joue (A, B).

2. Moyeu suivant la revendication 1, caractérisé en ce que les orifices (13) de rayons ménagés dans lesdites première et deuxième parties de joue (A, B) sont sensiblement égaux en longueur axiale, en ce que les premières parties de joue (A) sont décalées axialement vers l'extérieur par rapport aux deuxièmes parties de joue (B), et en ce que la surface axialement extérieure de chacune des joues de moyeu (12) comportant les deuxièmes orifices de rayons (13b) ménagés dans les deuxièmes parties de joue (B) est pourvue de faces de guidage (23) orientées dans chaque cas dans la direction dans laquelle les rayons introduits dans les orifices de rayons (13) sont dirigés pendant le fonctionnement du moyeu.

3. Moyeu suivant la revendication 2, caractérisé en ce que les faces de guidage (23) sont agencées pour s'étendre sensiblement dans la direction de rotation de la joue de moyeu (12) lorsque ledit moyeu est entraîné.

4. Moyeu (1) pour une roue à rayons, qui comprend une virole de moyeu (11), comportant à ses extrêmités axiales opposées une paire de joues de moyeu opposées (12); et un arbre de moyeu (10) pour supporter en rotation ladite virole de moyeu (11) par l'intermédiaire de deux roulements (14, 15) disposés entre cet arbre de moyeu (10) et la virole de moyeu (11); chacune des joues de moyeu (12) comportant une pluralité d'orifices de rayons (13) s'étendant chacun sensiblement parallèlement à l'axe de la virole de moyeu (11), cette pluralité d'orifices de rayons (13) étant disposée de façon sensiblement concentrique par rapport à l'axe de la virole de moyeu (11) et comprenant un premier groupe (13a) et und deuxième groupe (13b) d'orifices de rayons décalés axialement l'un par rapport à l'autre, les orifices successifs desdits premier et deuxième groupes (13a, 13b) alternant entre eux dans la direction circonférentielle, les orifices de rayons (13a, 13b) des premier et deuxième groupes étant disposés respectivement dans des premières et deuxièmes parties de joue (A, B), qui sont situées sensiblement circonférentiellement sur la joue de moyeu (12), lequel moyeu est caractérisé en ce que chacune des joues de moyeu (12) est pourvue d'un agencement à rondelle (30) comportant des orifices de rayons (31), cet angencement à rondelle 30 étant placé sur au moins une face de la joue de moyeu (12) en contact avec celle-ci, de façon à compléter au moins une desdites premières parties de joue (A) dans lesquelles le premier groupe d'orifices de rayons (13a) est ménagé et desdites deuxièmes parties de joue (B) dans lesquelles le deuxième groupe d'orifices de rayons (13b) est ménagé, les orifices de rayons (13, 31) ménagés respectivement dans la joue de moyeu (12) et dans l'agencement à rondelle (30) étant axialement alignés les uns avec les autres.

5. Moyeu suivant la revendication 4, caractérisé en ce que des premiers moyens de rondelle (30a) sont prévus en contact avec la surface axialement extérieure de chacune des joues de moyeu (12) et sont supportés par celle-ci et en ce que des deuxièmes moyens de rondelle (30b) sont prévus en contact avec la surface axialement intérieure de chacune des joues de moyeu (12) et sont supportés par celle-ci, pour compléter respectivement les premières et deuxièmes parties de joue et les premiers et deuxièmes orifices de rayons ménagés dans ces parties, respectivement.

6. Moyeu suivant la revendication 5, caractérisé en ce que les moyens de rondelle comprennent une pluralité de rondelles individuelles (30) dans chacune desquelles est ménagé un orifice (31) de rayon.

7. Moyeu suivant la revendication 4, caractérisé en ce que les moyens de rondelle comprennent une pièce de liaison sensiblement annulaire (32) comportant une pluralité d'orifices (31) de rayons, disposés sensiblement circonférentiellement dans cette pièce, en alignement avec les orifices de rayons respectifs (13) ménagés dans la joue de moyeu (12).

8. Moyeu suivant l'une quelconque des revendications 5 à 7, caractérisé en ce que les orifices de rayons (13a, 13b) des premier et deuxièmes groupes sont disposés à une distance régulière de l'axe de la virole de moyeu (11).

9. Moyeu suivant l'une quelconque des revendications précèdentes, caractérisé en ce que le premier groupe d'orifices de rayons (13a) ménagés dans les premières parties de joue (A) est situé intérieurement dans le sens radial, par rapport à l'axe de rotation de chacune des joues de moyeu (12), par rapport au deuxième groupe d'orifices de rayons (13b) ménagés dans les deuxièmes parties de joue (B).

10. Roue à rayons comprenant un moyeu (1) relié par des rayons (5) à une jante de roue, dans laquelle le moyeu (1) comprend une virole de moyeu (11) comportant à ses extrêmités axiales opposées une paire de joues de moyeu opposées (12); et und arbre de moyeu (10) pour supporter en rotation ladite virole de moyeu (11) par l'intermédiaire de deux roulements (14, 15) disposés entre l'arbre de moyeu (10) et la virole de moyeu (11); chacune des joues de moyeu (12) comportant une pluralité d'orifices de rayons (13) s'étendant chacun sensiblement parallèlement à l'axe de la virole de moyeu (11), cette pluralité d'orifices de rayons (13) étant disposée de façon sensiblement concentrique par rapport à l'axe de la virole de moyeu (11) et comprenant un premier groupe (13a) et un deuxième groupe (13b) d'orifices de rayons décalés axialement l'un par rapport à l'autre, les orifices successifs desdits premier et deuxième groupes (13a, 13b) alternant entre eux dans la direction circonférentielle, laquelle roue à rayons est caractérisée en ce que chacune des joues de moyeu comporte des moyens de rondelle (30) comportant des orifices de rayons (31), ces moyens de rondelle (30) étant disposés sur au moins une face de la joue de moyeu (12) en contact avec celle-ci de façon à compléter au moins une desdites premières parties de joue (A) dans lesquelles le premier groupe d'orifices de rayons (13a) est prévu et au moins une desdites deuxièmes parties de joue (B) dans lesquelles le deuxième groupe d'orifices de rayons (13b) est prévu, les rayons (S) traversant les orifices de rayons (13, 31) ménagés dans les joues de moyeu (12) et dans les moyens de rondelle (30) et retenant les moyens de rondelle (30) en contact avec les joues de moyeu (12).

*Fig.1*

*Fig.2*

*Fig.3*

# Fig.4

# Fig.5

# Fig.6

Fig.7

Fig.8

Fig.9

Fig.10

S
13b
S
12
30b
31
S₁
30d
13a

Fig.11

XII
XIII
S
12
XII XIII
30
31
32
13b
XII
XII

Fig.12

S
S
13a
12
24
S₁
31
30
13b

Fig.13

13b
S
12
S
S₁
30
S₁
32
24
13a

Fig.14

13
13a 13b
12
40

Fig.15

13b 13
13a
12
40